(19) Europäisches Patentamt
European Patent Office
Office européen des brevets

(11) **EP 4 464 742 A1**

(12) **EUROPEAN PATENT APPLICATION**

(43) Date of publication:
**20.11.2024 Bulletin 2024/47**

(21) Application number: **23174230.5**

(22) Date of filing: **19.05.2023**

(51) International Patent Classification (IPC):
***C08L 23/10*** *(2006.01)*

(52) Cooperative Patent Classification (CPC):
(C-Sets available)
C08L 2207/02; C08L 2207/20 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Borealis AG**
**1020 Vienna (AT)**

(72) Inventors:
- **MILEVA, Daniela**
**4021 Linz (AT)**
- **FUCHS, Andreas**
**4021 Linz (AT)**
- **ENGLEDER, Stefanie**
**4021 Linz (AT)**
- **GUBO, Robert**
**4021 Linz (AT)**
- **KNIESEL, Claudia**
**4021 Linz (AT)**

(74) Representative: **Maiwald GmbH**
**Elisenhof**
**Elisenstraße 3**
**80335 München (DE)**

# (54) ALDEHYDE SCAVENGERS FOR REDUCING ODORANT CONTENT IN RECYCLATE-CONTAINING POLYMER COMPOSITIONS

(57) The present invention relates to a polypropylene composition (PC) being a mixed-plastic polypropylene blend containing recycled material, to articles comprising said polypropylene composition, as well as to the use of certain additives for the reduction of aldehyde content in compositions derived at least partially from recyclates.



Processed by Luminess, 75001 PARIS (FR)

**(Cont. next page)**

(52) Cooperative Patent Classification (CPC): (Cont.)

C-Sets
**C08L 23/10, C08K 5/20, C08L 101/00;**
**C08L 23/12, C08L 23/04, C08L 23/12, C08L 23/14,**
**C08L 23/0815, C08L 51/06, C08K 7/14,**
**C08K 3/04, C08K 5/20;**
**C08L 23/12, C08L 23/04, C08L 23/12, C08L 23/16,**
**C08L 23/0815, C08L 51/06, C08K 7/14,**
**C08K 3/04, C08K 5/20**

## Description

### Field of the Invention

The present invention relates to a polypropylene composition (PC) being a mixed-plastic polypropylene blend containing recycled material, to articles comprising said polypropylene composition, as well as to the use of certain additives for the reduction of aldehyde content in compositions derived at least partially from recyclates.

### Background to the Invention

During the last decade, concern about plastics and the environmental sustainability of their use in current quantities has grown. This has led to new legislation on disposal, collection and recycling of polyolefins. There have additionally been efforts in a number of countries to increase the percentage of plastic materials being recycled instead of being sent to landfill.

In Europe, plastic waste accounts for approximately 27 million tons of waste a year; of this amount in 2016, 7.4 million tons were disposed of in landfill, 11.27 million tons were burnt (in order to produce energy) and around 8.5 million tons were recycled. Polypropylene based materials are a particular problem as these materials are extensively used in packaging. Taking into account the huge amount of waste collected compared to the amount of waste recycled back into the stream (amounting to only about 30 %), there is still a great potential for intelligent reuse of plastic waste streams and for mechanical recycling of plastic wastes.

Taking the automobile industry as an example. In Europe the end of life (ELV) directive from the EU states, that 85%/95% of materials from vehicles should be recyclable or recoverable. The present rate of recycling of automobile components is significantly below this target. On average vehicles consist of 9 wt.-% plastics, out of this 9 wt.-% only 3 wt.-% is currently recycled. Therefore, there is still a need to be met if targets for recycling plastics in the automobile industry are to be achieved. This invention particularly focuses on mechanically recycled waste streams as opposed to "energetic recycling" where polyolefins are burnt and used for energy. However, due to cost reasons, poor mechanical properties and inferior processing properties waste streams containing cross-linked polyolefins are often used for energy recovery (e.g. incineration in a district heating plant or for heat generation in the cement industry) and are less often recycled into new products.

One major trend in the field of polyolefins is the use of recycled materials that are derived from a wide variety of sources. Durable goods streams such as those derived from waste electrical equipment (WEE) or end-of-life vehicles (ELV) contain a wide variety of plastics. These materials can be processed to recover acrylonitrile-butadiene-styrene (ABS), high impact polystyrene (HIPS), polypropylene (PP) and polyethylene (PE) plastics. Separation can be carried out using density separation in water and then further separation based on fluorescence, near infrared absorption or raman fluorescence. However, it is commonly quite difficult to obtain either pure recycled polypropylene or pure recycled polyethylene. Generally, recycled quantities of polypropylene on the market are mixtures of both polypropylene (PP) and polyethylene (PE); this is especially true for post-consumer waste streams derived from household waste. Commercial recyclates from post-consumer waste sources have been found generally to contain mixtures of PP and PE, the minor component reaching up to < 50 wt.-%.

The better the quality, i.e. the higher the purity, of the recycled polyolefin the more expensive the material is. Moreover, recycled polyolefin materials are often cross-contaminated with non-polyolefin materials, such as polyethylene terephthalate, polyamide, polystyrene or non-polymeric substances like wood, paper, glass or aluminium.

In addition, recycled polypropylene rich materials normally have properties, which are much worse than those of the virgin materials, unless the amount of recycled polyolefin added to the final compound is extremely low. For example, such materials often have poor performance in odour and taste, limited stiffness, limited impact strength and poor mechanical properties (such as e.g. brittleness) thus, they do not fulfil customer requirements.

The poor mechanical properties can be improved through blending the recycled polyolefin with virgin polymers, or through the use of reinforcing fillers, however this does not address the issue of odour/taste.

The established method for removing volatile organic compounds from both virgin polymers and from recycled polymers involves aeration of the polymers. This may be achieved, inter alia, through the use of air, inert gases or steam.

Variants on this process have been known for many years, and are described, inter alia, in EP 0 004 601 A1**,** EP 0 859 809 A1**,** EP 0 964 877 A1**,** EP 1 542 777 A2**,** and EP 3 647 328 A1**.**

Whilst these methods can be very efficient at removing a broad range of volatile compounds, they can be energy intensive, which can be counterproductive when aiming for a recycling process that is as environmentally friendly as possible.

Furthermore, there are many processes known that result in the reduction of aldehyde content (aldehydes being a key odorant), the content of aldehydes will subsequently increase in further processing steps wherein further aldehyde is formed from decomposition reactions.

As such, there remains a need for further methods of reducing the content of aldehydes, wherein said methods are also able to maintain aldehyde levels at low values.

**Summary of the Invention**

The present invention is based on the finding that the blending of certain additives, in particular anthranilamide and barbituric acid, with post-consumer recyclate-containing compositions has the effect of drastically reducing the aldehyde content of said compositions, helping to avoid unwanted odor.

Therefore, in a first aspect, the present invention is directed to polypropylene composition (PC) comprising:

a) a mixed-plastic polypropylene blend (PP) having an amount of defects with a particle size in the range from 0.05 to 0.10 $mm^2$ in the range from 0.10 to 4.0 particles/$cm^2$; and
b) one or more compound(s) reactive with linear alkyl aldehydes.

In a second aspect, the present invention is directed to an article, preferably an injection-moulded article, comprising the polypropylene composition (PC) of the first aspect in an amount of at least 95 wt.-%, more preferably at least 98 wt.-%, most preferably at least 99 wt.-%.

In a third aspect, the present invention is directed to a use of a compound having a structure according to formula (I):

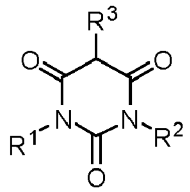
(I)

wherein $R^1$, $R^2$, and $R^3$ are each independently selected from the group consisting of a hydrogen atom, a linear or branched $C_1$-$C_{10}$ alkyl group, a hydroxyl group, an aryl group, a halogen atom, an acetyl group or a cyano group, for reducing the acetaldehyde content and/or the hexanal content of a polypropylene composition derived at least partially from post-consumer waste, without simultaneously increasing the acetone content by more than 30% and without simultaneously increasing the tert-butanol content by more than 10%.

In a final aspect, the present invention is directed to a use of a compound having a structure according to formula (II):

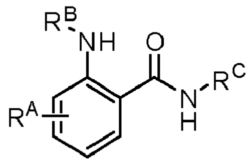
(II)

wherein $R^A$ represents from zero to four substitutions, each substitution being independently selected from the group consisting of a linear or branched $C_1$-$C_{10}$ alkyl group, a linear or branched $C_1$-$C_{10}$ alkoxy group, an aryl group or a halogen atom,
wherein each of $R^B$ and $R^C$ are selected from the group consisting of hydrogen and a linear or branched $C_1$-$C_{10}$ alkyl group,
for reducing the acetaldehyde content and/or the hexanal content of a polypropylene composition derived at least partially from post-consumer waste, without simultaneously increasing the acetone content by more than 30% and without simultaneously increasing the tert-butanol content by more than 10%.

**Definitions**

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below.

Unless clearly indicated otherwise, use of the terms "a," "an," and the like refers to one or more.
In the following, amounts are given in % by weight (wt.-%) unless it is stated otherwise.
A propylene homopolymer is a polymer that essentially consists of propylene monomer units. Due to impurities especially during commercial polymerization processes, a propylene homopolymer can comprise up to 0.1 mol% comonomer units, preferably up to 0.05 mol% comonomer units and most preferably up to 0.01 mol% comonomer units.
A propylene copolymer is a copolymer of propylene monomer units and comonomer units, preferably selected from ethylene and $C_4$-$C_8$ alpha-olefins. A propylene random copolymer is a propylene copolymer wherein the comonomer units are randomly distributed along the polymer chain, whilst a propylene block copolymer comprises blocks of propylene monomer units and blocks of comonomer units. Propylene random copolymers can comprise comonomer units from one or more comonomers different in their amounts of carbon atoms.
Heterophasic propylene copolymers typically comprise:

a) a crystalline propylene homopolymer or copolymer matrix (M); and
b) an elastomeric rubber, preferably a propylene-ethylene copolymer (E);

In case of a random heterophasic propylene copolymer, said crystalline matrix phase is a random copolymer of propylene and at least one alpha-olefin comonomer.
The elastomeric phase can be a propylene copolymer with a high amount of comonomer that is not randomly distributed in the polymer chain but is distributed in a comonomer-rich block structure and a propylene-rich block structure. A heterophasic polypropylene usually differentiates from a one-phasic propylene copolymer in that it shows two distinct glass transition temperatures Tg which are attributed to the matrix phase and the elastomeric phase.
For the purposes of the present description and of the subsequent claims, the term "recycled waste" is used to indicate a material recovered from both post-consumer waste and industrial waste, as opposed to virgin polymers. Post-consumer waste refers to objects having completed at least a first use cycle (or life cycle), i.e. having already served their first purpose; while industrial waste refers to manufacturing scrap, which does not normally reach a consumer.
The term "virgin" denotes the newly produced materials and/or objects prior to their first use, which have not already been recycled.
The term "recycled material" such as used herein denotes materials reprocessed from "recycled waste".
A polymer blend denotes a mixture of two or more polymeric components. In general, the blend can be prepared by mixing the two or more polymeric components. Suitable mixing procedures known in the art are post-polymerization blending procedures. Post-polymerization blending can be dry blending of polymeric components such as polymer powders and/or compounded polymer pellets or melt blending by melt mixing the polymeric components.
A mixed-plastic polypropylene blend indicates that the blend predominantly comprises polypropylene; however, small amounts of other plastic are present. Recyclate blends, in particular post-consumer recyclate blends, are almost always mixed-plastic blends, which reflects the efficiency of the sorting in state of the art recycling processes.
The present invention will now be described in more detail.

## Detailed Description

### Polypropylene composition (PC)

The polypropylene composition (PC) of the first aspect comprises:

a) a mixed-plastic polypropylene blend (PP); and
b) one or more compound(s) reactive with linear alkyl aldehydes.

Preferably the polypropylene composition (PC) comprises, more preferably consists of:

a) from 98.0 to 99.90 wt.-%, relative to the total weight of the polypropylene composition (PC), of the mixed-plastic polypropylene blend (PP); and
b) from 0.10 to 2.0 wt.-%, relative to the total weight of the polypropylene composition (PC), of the one or more compound(s) reactive with linear alkyl aldehydes.

More preferably the polypropylene composition (PC) comprises, more preferably consists of:

a) from 98.5 to 99.85 wt.-%, relative to the total weight of the polypropylene composition (PC), of the mixed-plastic polypropylene blend (PP); and
b) from 0.15 to 1.5 wt.-%, relative to the total weight of the polypropylene composition (PC), of the one or more

compound(s) reactive with linear alkyl aldehydes.

More preferably the polypropylene composition (PC) comprises, more preferably consists of:

a) from 99.0 to 99.80 wt.-%, relative to the total weight of the polypropylene composition (PC), of the mixed-plastic polypropylene blend (PP); and
b) from 0.20 to 1.0 wt.-%, relative to the total weight of the polypropylene composition (PC), of the one or more compound(s) reactive with linear alkyl aldehydes.

Preferably the polypropylene composition (PC) has an acetaldehyde concentration, determined by solid phase microextraction (HS-SPME-GC-MS), in the range from 0 to 50% of the value of the acetaldehyde concentration of the mixed plastic polypropylene blend (PP), also determined by solid phase microextraction (HS-SPME-GC-MS).

Preferably the polypropylene composition (PC) has a hexanal concentration, determined by solid phase microextraction (HS-SPME-GC-MS), in the range from 0 to 60% of the value of the hexanal concentration of the mixed plastic polypropylene blend (PP), also determined by solid phase microextraction (HS-SPME-GC-MS).

One essential component of the polypropylene composition (PC) is the mixed-plastic polypropylene blend (PP).

The mixed-plastic polypropylene blend (PP) has an amount of defects with a particle size in the range from 0.05 to 0.10 $mm^2$ in the range from 0.10 to 4.0 particles/$cm^2$.

Having an amount of defects in this range is indicative that the mixed-plastic polypropylene blend (PP) at least partially originates from post-consumer waste.

Further indications of the recycled-nature of the mixed-plastic polypropylene blend (PP) include the presence of other polymers, such as polystyrene and polyamide-6, and the presence of limonene and/or fatty acids.

Accordingly, it is further preferred that the mixed-plastic polypropylene blend (PP) comprises one or more of polystyrene, polyamide-6, limonene and fatty acids, preferably comprises each of polystyrene, polyamide-6, limonene and fatty acids.

The mixed-plastic polypropylene blend (PP) preferably has a melt flow ($MFR_2$), determined according to ISO 1133 at 230 °C and 2.16 kg, in the range from 5.0 to 100 g/10 min, more preferably in the range from 10.0 to 70 g/10 min, most preferably in the range from 15.0 to 40 g/10 min.

The mixed-plastic polypropylene blend (PP) preferably has an ethylene content (C2(total)), determined by FT-IR spectroscopy calibrated by quantitative $^{13}C$-NMR spectroscopy, in the range from 3.0 to 15.0 wt.-%, more preferably in the range from 4.0 to 12.0 wt.-%, most preferably in the range from 5.0 to 9.0 wt.-%.

The mixed-plastic polypropylene blend (PP) preferably has a has a soluble fraction (SF) content, determined according to CRYSTEX QC analysis, in the range from 5.0 to 20.0 wt.-%, more preferably in the range from 8.0 to 15.0 wt.-%, most preferably in the range from 10.0 to 13.0 wt.-%.

The mixed-plastic polypropylene blend (PP) preferably has a has a crystalline fraction (CF) content, determined according to CRYSTEX QC analysis, in the range from 80.0 to 95.0 wt.-%, more preferably in the range from 85.0 to 92.0 wt.-%, most preferably in the range from 87.0 to 90.0 wt.-%.

The mixed-plastic polypropylene blend (PP) preferably has an ethylene content of the soluble fraction (C2(SF)), according to CRYSTEX QC analysis, determined by FT-IR spectroscopy calibrated by quantitative $^{13}C$-NMR spectroscopy, in the range from 15 to 60 wt.-%, more preferably in the range from 20 to 55 wt.-%, most preferably in the range from 25 to 50 wt.-%.

The mixed-plastic polypropylene blend (PP) preferably has an ethylene content of the crystalline fraction (C2(CF)), according to CRYSTEX QC analysis, determined by FT-IR spectroscopy calibrated by quantitative $^{13}C$-NMR spectroscopy, in the range from 0.5 to 6.0 wt.-%, more preferably in the range from 0.8 to 5.5 wt.-%, most preferably in the range from 1.0 to 5.0 wt.-%.

The mixed-plastic polypropylene blend (PP) preferably has an intrinsic viscosity, determined according to DIN ISO 1628/1, of the soluble fraction (iV(SF)), according to CRYSTEX QC analysis, in the range from 1.50 to 2.50 dL/g, more preferably in the range from 1.60 to 220 dL/g, most preferably in the range from 1.70 to 2.00 dL/g.

The mixed-plastic polypropylene blend (PP) preferably has an intrinsic viscosity, determined according to DIN ISO 1628/1, of the crystalline fraction (iV(CF)), according to CRYSTEX QC analysis, in the range from 1.00 to 2.00 dL/g, more preferably in the range from 1.25 to 1.85 dL/g, most preferably in the range from 1.50 to 1.70 dL/g.

In a first embodiment, the mixed-plastic polypropylene blend (PP) originates from post-consumer waste. In other words, the mixed-plastic polypropylene blend (PP) is free from virgin polypropylene, more preferably is free from virgin polymers.

In this first embodiment, the mixed-plastic polypropylene blend (PP) preferably has an acetaldehyde concentration, determined by solid phase microextraction (HS-SPME-GC-MS) on a powdered sample, in the range from 100 to 2000 mg/$m^3$, more preferably in the range from 15 to 1800 mg/$m^3$, most preferably in the range from 200 to 1700 mg/$m^3$.

In this first embodiment, the mixed-plastic polypropylene blend (PP) preferably has an hexanal concentration,

determined by solid phase microextraction (HS-SPME-GC-MS) on a powdered sample, in the range from 1 to 60 $mg/m^3$, more preferably in the range from 5 to 50 $mg/m^3$, most preferably in the range from 10 to 40 $mg/m^3$.

Furthermore, in this first embodiment the mixed-plastic polypropylene blend (PP) preferably has a melt flow ($MFR_2$), determined according to ISO 1133 at 230 °C and 2.16 kg, in the range from 5.0 to 50 g/10 min, more preferably in the range from 10.0 to 40 g/10 min, most preferably in the range from 15.0 to 30 g/10 min.

In this first embodiment, the mixed-plastic polypropylene blend (PP) preferably has an ethylene content (C2(total)), determined by FT-IR spectroscopy calibrated by quantitative $^{13}C$-NMR spectroscopy, in the range from 3.0 to 15.0 wt.-%, more preferably in the range from 4.0 to 12.0 wt.-%, most preferably in the range from 5.0 to 9.0 wt.-%.

In this first embodiment, the mixed-plastic polypropylene blend (PP) preferably has a has a soluble fraction (SF) content, determined according to CRYSTEX QC analysis, in the range from 5.0 to 20.0 wt.-%, more preferably in the range from 8.0 to 15.0 wt.-%, most preferably in the range from 10.0 to 13.0 wt.-%.

In this first embodiment, the mixed-plastic polypropylene blend (PP) preferably has a has a crystalline fraction (CF) content, determined according to CRYSTEX QC analysis, in the range from 80.0 to 95.0 wt.-%, more preferably in the range from 85.0 to 92.0 wt.-%, most preferably in the range from 87.0 to 90.0 wt.-%.

In this first embodiment, the mixed-plastic polypropylene blend (PP) preferably has an ethylene content of the soluble fraction (C2(SF)), according to CRYSTEX QC analysis, determined by FT-IR spectroscopy calibrated by quantitative $^{13}C$-NMR spectroscopy, in the range from 15 to 50 wt.-%, more preferably in the range from 20 to 40 wt.-%, most preferably in the range from 25 to 35 wt.-%.

In this first embodiment, the mixed-plastic polypropylene blend (PP) preferably has an ethylene content of the crystalline fraction (C2(CF)), according to CRYSTEX QC analysis, determined by FT-IR spectroscopy calibrated by quantitative $^{13}C$-NMR spectroscopy, in the range from 1.0 to 6.0 wt.-%, more preferably in the range from 2.0 to 5.5 wt.-%, most preferably in the range from 3.0 to 5.0 wt.-%.

In this first embodiment, the mixed-plastic polypropylene blend (PP) preferably has an intrinsic viscosity, determined according to DIN ISO 1628/1, of the soluble fraction (iV(SF)), according to CRYSTEX QC analysis, in the range from 1.50 to 2.00 dL/g, more preferably in the range from 1.55 to 1.90 dL/g, most preferably in the range from 1.60 to 1.80 dL/g.

In this first embodiment, the mixed-plastic polypropylene blend (PP) preferably has an intrinsic viscosity, determined according to DIN ISO 1628/1, of the crystalline fraction (iV(CF)), according to CRYSTEX QC analysis, in the range from 1.00 to 2.00 dL/g, more preferably in the range from 1.25 to 1.85 dL/g, most preferably in the range from 1.50 to 1.70 dL/g.

In a second embodiment, the mixed-plastic polypropylene blend (PP) may be obtainable by blending a mixed-plastic polypropylene blend (B) with one or more components.

Suitable components include, but are not limited to virgin polymers, such as one or more heterophasic propylene-ethylene copolymer(s) (HECO), one or more propylene homopolymer(s) (h-PP), one or more elastomeric ethylene copolymer(s) (E), a polar group-modified polypropylene (PMP). Other suitable components include non-polymeric components, such as fillers, for example, carbon and/or glass fibers (F1) or inorganic filler(s) (F2) different to the carbon and/or glass fibers (F1). In addition, further additives known to the person skilled in the art may be added.

The mixed plastic polypropylene blend (B) preferably originates from post-consumer waste and thus has an amount of defects with a particle size in the range from 0.05 to 0.10 $mm^2$ in the range from 0.10 to 4.0 particles/$cm^2$.

In this second embodiment, the mixed-plastic polypropylene blend (PP) is preferably obtainable by blending:

a) from 0 to 50 wt.-%, relative to the total weight of the mixed-plastic polypropylene blend (PP), of one or more heterophasic propylene-ethylene copolymer(s) (HECO);
b) from 0 to 50 wt.-%, relative to the total weight of the mixed-plastic polypropylene blend (PP), of one or more propylene homopolymer(s) (h-PP);
c) from 0 to 10 wt.-%, relative to the total weight of the mixed-plastic polypropylene blend (PP), of one or more elastomeric ethylene copolymer(s) (E);
d) from 20 to 90 wt.-%, relative to the total weight of the mixed-plastic polypropylene blend (PP), of a mixed plastic polypropylene blend (B) having an amount of defects with a particle size in the range from 0.05 to 0.10 $mm^2$ in the range from 0.10 to 4.0 particles/$cm^2$;
e) from 0 to 30 wt.-%, relative to the total weight of the mixed-plastic polypropylene blend (PP), of carbon and/or glass fibers (F1);
f) from 0 to 30 wt.-%, relative to the total weight of the mixed-plastic polypropylene blend (PP), of inorganic filler(s) (F2) different to the carbon and/or glass fibers (F1);
g) from 0 to 10 wt.-%, relative to the total weight of the mixed-plastic polypropylene blend (PP), of a polar group-modified polypropylene (PMP); and
h) from 0 to 5 wt.-%, relative to the total weight of the mixed-plastic polypropylene blend (PP), of further additives different to the carbon and/or glass fibers (F1), the inorganic filler(s) (F2) and the polar group-modified polypropylene

(PMP).

More preferably, the mixed-plastic polypropylene blend (PP) of the second embodiment is obtainable by blending:

a) from 5 to 30 wt.-%, relative to the total weight of the mixed-plastic polypropylene blend (PP), of one or more heterophasic propylene-ethylene copolymer(s) (HECO);

b) from 5 to 30 wt.-%, relative to the total weight of the mixed-plastic polypropylene blend (PP), of one or more propylene homopolymer(s) (h-PP);

c) from 1 to 5 wt.-%, relative to the total weight of the mixed-plastic polypropylene blend (PP), of one or more elastomeric ethylene copolymer(s) (E);

d) from 20 to 70 wt.-%, relative to the total weight of the mixed-plastic polypropylene blend (PP), of a mixed plastic polypropylene blend (B) having an amount of defects with a particle size in the range from 0.05 to 0.10 $mm^2$ in the range from 0.10 to 4.0 particles/$cm^2$;

e) from 10 to 30 wt.-%, relative to the total weight of the mixed-plastic polypropylene blend (PP), of glass fibers (F1);

f) from 0.5 to 5 wt.-%, relative to the total weight of the mixed-plastic polypropylene blend (PP), of a polar group-modified polypropylene (PMP); and

g) from 0 to 5 wt.-%, relative to the total weight of the mixed-plastic polypropylene blend (PP), of further additives different to the glass fibers (F1) and the polar group-modified polypropylene (PMP),

wherein the combined amounts of the one or more heterophasic propylene-ethylene copolymer(s) (HECO), the one or more propylene homopolymer(s) (h-PP), the one or more elastomeric ethylene copolymer(s) (E), the mixed plastic polypropylene blend (B), the glass fibers (F1), the polar group-modified polypropylene (PMP), the further additives and the equal 100 wt.-%, relative to the total weight of the mixed-plastic polypropylene blend (PP).

Yet more preferably, the mixed-plastic polypropylene blend (PP) of the second embodiment is obtainable by blending:

a) from 8 to 15 wt.-%, relative to the total weight of the mixed-plastic polypropylene blend (PP), of one or more heterophasic propylene-ethylene copolymer(s) (HECO);

b) from 20 to 30 wt.-%, relative to the total weight of the mixed-plastic polypropylene blend (PP), of one or more propylene homopolymer(s) (h-PP);

c) from 1 to 3 wt.-%, relative to the total weight of the mixed-plastic polypropylene blend (PP), of one or more elastomeric ethylene copolymer(s) (E);

d) from 30 to 50 wt.-%, relative to the total weight of the mixed-plastic polypropylene blend (PP), of a mixed plastic polypropylene blend (B) having an amount of defects with a particle size in the range from 0.05 to 0.10 $mm^2$ in the range from 0.10 to 4.0 particles/$cm^2$;

e) from 15 to 25 wt.-%, relative to the total weight of the mixed-plastic polypropylene blend (PP), of glass fibers (F1);

f) from 0.5 to 2 wt.-%, relative to the total weight of the mixed-plastic polypropylene blend (PP), of a polar group-modified polypropylene (PMP); and

g) from 0 to 3 wt.-%, relative to the total weight of the mixed-plastic polypropylene blend (PP), of further additives different to the glass fibers (F1) and the polar group-modified polypropylene (PMP),

wherein the combined amounts of the one or more heterophasic propylene-ethylene copolymer(s) (HECO), the one or more propylene homopolymer(s) (h-PP), the one or more elastomeric ethylene copolymer(s) (E), the mixed plastic polypropylene blend (B), the glass fibers (F1), the polar group-modified polypropylene (PMP), the further additives and the equal 100 wt.-%, relative to the total weight of the mixed-plastic polypropylene blend (PP).

In this second embodiment, the acetaldehyde concentration, determined by solid phase microextraction (HS-SPME-GC-MS) on pellets, in the range from 0 to 100 mg/$m^3$, more preferably in the range from 5 to 75 mg/$m^3$, most preferably in the range from 10 to 50 mg/$m^3$.

In this second embodiment, the hexanal concentration, determined by solid phase microextraction (HS-SPME-GC-MS) on pellets, in the range from 0 to 20 mg/$m^3$, more preferably in the range from 0 to 10 mg/$m^3$, most preferably in the range from 0 to 5 mg/$m^3$.

Furthermore, in this second embodiment, it is preferred that the mixed-plastic polypropylene blend (PP) preferably has a melt flow ($MFR_2$), determined according to ISO 1133 at 230 °C and 2.16 kg, in the range from 1 to 50 g/10 min, more preferably in the range from 5 to 30 g/10 min, most preferably in the range from 8 to 25 g/10 min.

In this second embodiment, the mixed-plastic polypropylene blend (PP) preferably has an ethylene content (C2(total)), determined by FT-IR spectroscopy calibrated by quantitative $^{13}C$-NMR spectroscopy, in the range from 5.0 to 15.0 wt.-%, more preferably in the range from 7.0 to 12.0 wt.-%, most preferably in the range from 8.0 to 10.0 wt.-%.

In this second embodiment, the mixed-plastic polypropylene blend (PP) preferably has a has a soluble fraction (SF) content, determined according to CRYSTEX QC analysis, in the range from 5.0 to 20.0 wt.-%, more preferably in the range from 8.0 to 15.0 wt.-%, most preferably in the range from 11.0 to 13.0 wt.-%.

In this second embodiment, the mixed-plastic polypropylene blend (PP) preferably has a has a crystalline fraction (CF) content, determined according to CRYSTEX QC analysis, in the range from 80.0 to 95.0 wt.-%, more preferably in the range from 85.0 to 92.0 wt.-%, most preferably in the range from 87.0 to 89.0 wt.-%.

In this second embodiment, the mixed-plastic polypropylene blend (PP) preferably has an ethylene content of the soluble fraction (C2(SF)), according to CRYSTEX QC analysis, determined by FT-IR spectroscopy calibrated by quantitative $^{13}C$-NMR spectroscopy, in the range from 30 to 60 wt.-%, more preferably in the range from 35 to 55 wt.-%, most preferably in the range from 40 to 50 wt.-%.

In this second embodiment, the mixed-plastic polypropylene blend (PP) preferably has an ethylene content of the crystalline fraction (C2(CF)), according to CRYSTEX QC analysis, determined by FT-IR spectroscopy calibrated by quantitative $^{13}C$-NMR spectroscopy, in the range from 0.5 to 4.0 wt.-%, more preferably in the range from 0.8 to 3.5 wt.-%, most preferably in the range from 1.0 to 2.0 wt.-%.

In this second embodiment, the mixed-plastic polypropylene blend (PP) preferably has an intrinsic viscosity, determined according to DIN ISO 1628/1, of the soluble fraction (iV(SF)), according to CRYSTEX QC analysis, in the range from 1.50 to 2.50 dL/g, more preferably in the range from 1.70 to 2.30 dL/g, most preferably in the range from 1.90 to 2.10 dL/g.

In this second embodiment, the mixed-plastic polypropylene blend (PP) preferably has an intrinsic viscosity, determined according to DIN ISO 1628/1, of the crystalline fraction (iV(CF)), according to CRYSTEX QC analysis, in the range from 1.00 to 2.00 dL/g, more preferably in the range from 1.25 to 1.85 dL/g, most preferably in the range from 1.50 to 1.70 dL/g.

Another essential component of the polypropylene composition is one or more compound(s) reactive with linear alkyl aldehydes.

In the broadest sense, this component may be any compound understood by the skilled person to react with linear alkyl aldehydes. Linear alkyl aldehydes are known to react in a number of ways, in particular with nucleophiles in addition and/or condensation reactions. Suitable nucleophilic compounds include primary amines (forming imines), secondary amines (forming iminiums), carbonyl-containing compounds with acidic $\alpha$-protons (which react via aldol and aldol-derived processes (such as Knoevenagel condensation)). Alternatively, the aldehyde may react with multiple nucleophiles to form acetals, hemiacetals, aminals, or hemiaminals or Mannich reaction products.

Certain compounds reactive with linear alkyl aldehydes are, however, preferred.

In one embodiment, the one or more compound(s) reactive with linear aldehydes comprises at least one compound having a structure according to formula (I):

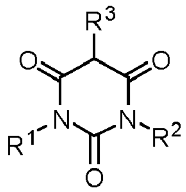

(I)

wherein $R^1$, $R^2$, and $R^3$ are each independently selected from the group consisting of a hydrogen atom, a linear or branched $C_1$-$C_{10}$ alkyl group, a hydroxyl group, an aryl group, a halogen atom, an acetyl group or a cyano group.

These barbituric acid-based compounds are particularly effective acid scavengers.

It is preferred that $R^1$ and $R^2$ are each independently selected from the group consisting of a hydrogen atom, a linear or branched $C_1$-$C_{10}$ alkyl group, an aryl group and an acetyl group.

It is preferred that $R^3$ is selected from the group consisting of hydrogen, an acetyl group or a cyano group.

Most preferably, $R^3$ is hydrogen.

In one particularly preferred embodiment, $R^1$, $R^2$ and $R^3$ are all hydrogen, meaning that the compound having a structure according to formula (I) is barbituric acid, i.e. has the following formula:

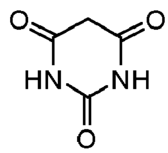

In another embodiment, the one or more compound(s) reactive with linear aldehydes comprises at least one

compound having a structure according to formula (II):

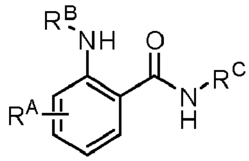

(II)

wherein $R^A$ represents from zero to four substitutions, each substitution being independently selected from the group consisting of a linear or branched $C_1$-$C_{10}$ alkyl group, a linear or branched $C_1$-$C_{10}$ alkoxy group, an aryl group and a halogen atom,

wherein each of $R^B$ and $R^C$ are selected from the group consisting of hydrogen and a linear or branched $C_1$-$C_{10}$ alkyl group.

These anthranilamide-based compounds are also particularly effective acid scavengers.

It is preferred that each of $R^B$ and $R^C$ is selected from the group consisting of hydrogen and methyl. Most preferably, both $R^B$ and $R^C$ are hydrogen.

$R^A$ represents from zero to four substitutions, i.e. 0, 1, 2, 3, or 4 substitutions. Preferably, $R^A$ represents 0, 1, or 2 substitutions. More preferably, $R^A$ represents 0 or 1 substitution. Most preferably, $R^A$ represents zero substitutions.

Each substitution of $R^A$ is preferably selected from the group consisting of linear or branched $C_1$-$C_{10}$ alkyl group, a linear or branched $C_1$-$C_{10}$ alkoxy group, and a halogen atom. More preferably, each substitution of $R^A$ is selected from the group consisting of linear or branched $C_1$-$C_{10}$ alkyl group and a linear or branched $C_1$-$C_{10}$ alkoxy group. In one embodiment, at least one $R^A$ is methyl. In another embodiment, at least $R^A$ is methoxy. In another embodiment, at least one $R^A$ is fluorine, chlorine, bromine or iodine.

It is particularly preferred that $R^A$ represents zero substitutions and $R^B$ and $R^C$ are both hydrogen, i.e. the compound having a structure according to formula (II) is anthranilamide, i.e. has the following formula:

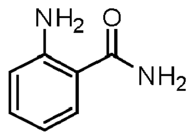

Both the compounds having a structure according to formula (I) (i.e. barbituric acid-based) and having a structure according to formula (II) (i.e. anthranilamide-based) are not only able to reduce the amounts of aldehyde present in the polypropylene composition (PC), but also to continue scavenging any further aldehydes that are produced during further processing of the composition, for example during extrusion or moulding.

The compound(s) reactive with linear alkyl aldehydes according to the present invention are understood to reduce the content of linear alkyl aldehydes by various mechanisms other than the oxidation of the linear alkyl aldehydes to corresponding linear alkyl carboxylic acids. As such, it is further preferred that the acetic acid concentration, determined by solid phase microextraction (HS-SPME-GC-MS) does not increase as a result of the addition of the compound(s) reactive with linear alkyl aldehydes.

## The article

In a second aspect, the present invention is directed to an article, preferably an injection-moulded article, comprising the polypropylene composition according to the first aspect in an amount of at least 95 wt.-%, more preferably at least 98 wt.-%, most preferably at least 99 wt.-%.

Preferably, the article, more preferably the injection-moulded article, is an automotive exterior article, more preferably selected from the group consisting of bumpers, side trims, step assists, body panels, and spoilers.

All preferred embodiments and fallback positions for the polypropylene composition of the first aspect apply mutatis mutandis to the article of the second aspect.

## Use

In a third aspect, the present invention is directed to a use of a compound having a structure according to formula (I):

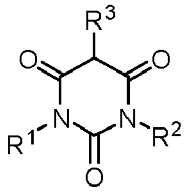

(I)

wherein $R^1$, $R^2$, and $R^3$ are each independently selected from the group consisting of a hydrogen atom, a linear or branched $C_1$-$C_{10}$ alkyl group, a hydroxyl group, an aryl group, a halogen atom, an acetyl group or a cyano group,
for reducing the acetaldehyde content and/or the hexanal content of a polypropylene composition derived at least partially from post-consumer waste, without simultaneously increasing the acetone content by more than 30% and without simultaneously increasing the tert-butanol content by more than 10%.

In a final aspect, the present invention is directed to a use of a compound having a structure according to formula (II):

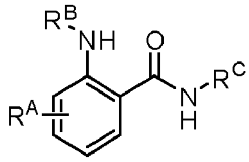

(II)

wherein $R^A$ represents from zero to four substitutions, each substitution being independently selected from the group consisting of a linear or branched $C_1$-$C_{10}$ alkyl group, a linear or branched $C_1$-$C_{10}$ alkoxy group, an aryl group or a halogen atom,
wherein each of $R^B$ and $R^C$ are selected from the group consisting of hydrogen and a linear or branched $C_1$-$C_{10}$ alkyl group,
for reducing the acetaldehyde content and/or the hexanal content of a polypropylene composition derived at least partially from post-consumer waste, without simultaneously increasing the acetone content by more than 30% and without simultaneously increasing the tert-butanol content by more than 10%.

In both the third and final aspects, it is further preferred that the acetic acid concentration, determined by solid phase microextraction (HS-SPME-GC-MS), of the polypropylene composition derived a least partially from post-consumer waste is not increased.

In both the third and final aspects, the polypropylene composition is preferably the polypropylene composition of the first aspect.

All preferred embodiments and fallback positions for the compounds having structures according to formula (I) or (II) of the first aspect apply mutatis mutandis to the uses of the third and final aspects.

## EXAMPLES

### 1. Measurement methods

The following definitions of terms and determination methods apply for the above general description of the invention including the claims as well as to the below examples unless otherwise defined.

### Quantification of microstructure by NMR spectroscopy

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 180 °C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilising the NOE at short recycle delays of 3 s {pollard04, klimke06} and the RS-HEPT decoupling scheme {fillip05,griffin07}. A total of 1024 (1k) transients were acquired per spectra.

Quantitative $^{13}C\{^1H\}$ NMR spectra were processed, integrated and relevant quantitative properties determined

from the integrals. All chemical shifts are internally referenced to the methyl isotactic pentad (*mmmm*) at 21.85 ppm.

Characteristic signals corresponding to the incorporation of 1-butene were observed {brandolini01} and the comonomer content quantified.

The amount of isolated 1-butene incorporated in PBP sequences was quantified using the integral of the αB2 sites at 43.6 ppm accounting for the number of reporting sites per comonomer:

$$B = I_{\alpha B2} / 2$$

The amount of consecutively incorporated 1-butene in PBBP sequences was quantified using the integral of the ααB2B2 site at 40.5 ppm accounting for the number of reporting sites per comonomer:

$$BB = 2 * I_{\alpha\alpha B2B2}$$

In presence of BB the value of B must be corrected for the influence of the αB2 sites resulting from BB:

$$B = (I_{\alpha B2} / 2) - BB/2$$

The total 1-butene content was calculated based on the sum of isolated and consecutively incorporated 1-butene:

$$B_{total} = B + BB$$

Characteristic signals corresponding to the incorporation of ethylene were observed {brandolini01} and the comonomer content quantified.

The amount of isolated ethylene incorporated in PEP sequences was quantified using the integral of the Sββ sites at 24.3 ppm accounting for the number of reporting sites per comonomer:

$$E = I_{S\beta\beta}$$

If characteristic signals corresponding to consecutive incorporation of ethylene in PEE sequence was observed the Sβδ site at 27.0 ppm was used for quantification:

$$EE = I_{S\beta\delta}$$

Characteristic signals corresponding to regio defects were observed {resconi00}. The presence of isolated 2,1-erythro regio defects was indicated by the presence of the two methyl sites at 17.7 and 17.2 ppm, by the methylene site at 42.4 ppm and confirmed by other characteristic sites. The presence of 2,1 regio defect adjacent an ethylene unit was indicated by the two inequivalent Sαβ signals at 34.8 ppm and 34.4 ppm respectively and the Tγγ at 33.7 ppm.

The amount of isolated 2,1-erythro regio defects ($P_{21e\ isolated}$) was quantified using the integral of the methylene site at 42.4 ppm ($I_{e9}$):

$$P_{21e\ isolated} = I_{e9}$$

If present the amount of 2,1 regio defect adjacent to ethylene ($P_{E21}$) was quantified using the methine site at 33.7 ppm ($I_{T\gamma\gamma}$):

$$P_{E21} = I_{T\gamma\gamma}$$

The total ethylene content was then calculated based on the sum of ethylene from isolated, consecutively incorporated and adjacent to 2,1 regio defects:

$$E_{total} = E + EE + P_{E21}$$

The amount of propylene was quantified based on the Sαα methylene sites at 46.7 ppm including all additional

propylene units not covered by $S\alpha\alpha$ e.g. the factor $3^*P_{21e\ isolated}$ accounts for the three missing propylene units from isolated 2,1-erythro regio defects:

$$P_{total} = I_{S\alpha\alpha} + 3^*P_{21e\ isolated} + B + 0.5^*BB + E + 0.5^*EE + 2^*P_{E21}$$

The total mole fraction of 1-butene and ethylene in the polymer was then calculated as:

$$fB = B_{total} / ( E_{total} + P_{total} + B_{total} )$$

$$fE = E_{total} / ( E_{total} + P_{total} + B_{total} )$$

The mole percent comonomer incorporation was calculated from the mole fractions:

$$B\ [mol\%] = 100 * fB$$

$$E\ [mol\%] = 100 * fE$$

The weight percent comonomer incorporation was calculated from the mole fractions:

$$B\ [wt.\text{-}\%] = 100 * ( fB * 56.11 ) / ( (fE * 28.05) + (fB * 56.11) + ((1-(fE+fB)) * 42.08) )$$

$$E\ [wt.\text{-}\%] = 100 * ( fE * 28.05 ) / ( (fE * 28.05) + (fB * 56.11) + ((1-(fE+fB)) * 42.08) )$$

The mole percent of isolated 2,1-erythro regio defects was quantified with respect to all propylene:

$$[21e]\ mol\% = 100 * P_{21e\ isolated} / P_{total}$$

The mole percent of 2,1 regio defects adjacent to ethylene was quantified with respect to all propylene:

$$[E21]\ mol\% = 100 * P_{E21} / P_{total}$$

The total amount of 2,1 defects was quantified as following:

$$[21]\ mol\% = [21e] + [E21]$$

Characteristic signals corresponding to other types of regio defects (2,1-threo, 3,1 insertion) were not observed {resconi00}.

Literature (as referred to above):

| | |
|---|---|
| klimke06 | Klimke, K., Parkinson, M., Piel, C., Kaminsky, W., Spiess, H.W., Wilhelm, M., Macromol. Chem. Phys. 2006;207:382. |
| parkinson07 | Parkinson, M., Klimke, K., Spiess, H.W., Wilhelm, M., Macromol. Chem. Phys. 2007;208:2128. |
| pollard04 | Pollard, M., Klimke, K., Graf, R., Spiess, H.W., Wilhelm, M., Sperber, O., Piel, C., Kaminsky, W., Macromolecules 2004;37:813. |
| filip05 | Filip, X., Tripon, C., Filip, C., J. Mag. Resn. 2005, 176, 239 |
| griffin07 | Griffin, J.M., Tripon, C., Samoson, A., Filip, C., and Brown, S.P., Mag. Res. in Chem. 2007 45, S1, S198. |
| castignolles09 | Castignolles, P., Graf, R., Parkinson, M., Wilhelm, M., Gaborieau, M., Polymer 50 (2009) 2373. |

(continued)


| | |
|---|---|
| resconi00 | Resconi, L., Cavallo, L., Fait, A., Piemontesi, F., Chem. Rev. 2000, 100, 1253. |
| brandolini01 | A.J. Brandolini, D.D. Hills, "NMR spectra of polymers and polymer additives", Marcel Deker Inc., 2000 |


**CRYSTEX QC analysis**

***Crystalline and soluble fractions method***

The crystalline (CF) and soluble fractions (SF) of the polypropylene (PP) compositions as well as the comonomer content and intrinsic viscosities of the respective fractions were analyzed by use of the CRYSTEX instrument, Polymer Char (Valencia, Spain). Details of the technique and the method can be found in literature (Ljiljana Jeremic, Andreas Albrecht, Martina Sandholzer & Markus Gahleitner (2020) Rapid characterization of high-impact ethylene-propylene copolymer composition by crystallization extraction separation: comparability to standard separation methods, International Journal of Polymer Analysis and Characterization, 25:8, 581-596)

The crystalline and amorphous fractions are separated through temperature cycles of dissolution at 160 °C, crystallization at 40 °C and re-dissolution in 1,2,4-trichlorobenzene at 160 °C. Quantification of SF and CF and determination of ethylene content (C2) are achieved by means of an integrated infrared detector (IR4) and for the determination of the intrinsic viscosity (IV) an online 2-capillary viscometer is used.

The IR4 detector is a multiple wavelength detector measuring IR absorbance at two different bands ($CH_3$ stretching vibration (centred at app. 2960 $cm^{-1}$) and the CH stretching vibration (2700-3000 $cm^{-1}$) that are serving for the determination of the concentration and the Ethylene content in Ethylene-Propylene copolymers. The IR4 detector is calibrated with series of 8 EP copolymers with known Ethylene content in the range of 2 wt.-% to 69 wt.-% (determined by $^{13}C$-NMR) and each at various concentrations, in the range of 2 and 13mg/ml. To encounter for both features, concentration and ethylene content at the same time for various polymer concentrations expected during Crystex analyses the following calibration equations were applied:

$$Conc = a + b*Abs(CH) + c*(Abs(CH))^2 + d*Abs(CH_3) + e*(Abs(CH_3)^2 + f*Abs(CH)*Abs(CH_3) \quad \text{(Equation 1)}$$

$$CH_3/1000C = a + b*Abs(CH) + c*Abs(CH_3) + d*(Abs(CH_3)/Abs(CH)) + e*(Abs(CH_3)/Abs(CH))^2 \quad \text{(Equation 2)}$$

The constants a to e for equation 1 and a to f for equation 2 were determined by using least square regression analysis.

The $CH_3$/1000C is converted to the ethylene content in wt.-% using following relationship:

$$\text{Wt.-\% (Ethylene in EP Copolymers)} = 100 - CH_3/1000TC * 0.3 \quad \text{(Equation 3)}$$

Amounts of Soluble Fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 wt.-%. The determined XS calibration is linear:

$$\text{Wt.-\% XS} = 1{,}01 * \text{Wt.-\% SF} \quad \text{(Equation 4)}$$

Intrinsic viscosity (IV) of the parent EP copolymer and its soluble and crystalline fractions are determined with a use of an online 2-capillary viscometer and are correlated to corresponding IV's determined by standard method in decalin according to ISO 1628-3. Calibration is achieved with various EP PP copolymers with IV = 2-4 dL/g. The determined calibration curve is linear:

$$IV (dL/g) = a^* Vsp/c \quad \text{(equation 5)}$$

The samples to be analyzed are weighed out in concentrations of 10mg/ml to 20mg/ml. To avoid injecting possible gels and/or polymers which do not dissolve in TCB at 160 °C, like PET and PA, the weighed out sample was packed into a stainless steel mesh MW 0,077/D 0,05mmm.

After automated filling of the vial with 1,2,4-TCB containing 250 mg/l 2,6-tert-butyl-4-methylphenol (BHT) as antioxidant, the sample is dissolved at 160 °C until complete dissolution is achieved, usually for 60 min, with constant stirring of 400rpm. To avoid sample degradation, the polymer solution is blanketed with the N2 atmosphere during dissolution.

A defined volume of the sample solution is injected into the column filled with inert support where the crystallization of the sample and separation of the soluble fraction from the crystalline part is taking place. This process is repeated two times. During the first injection the whole sample is measured at high temperature, determining the IV[dl/g] and the C2[wt.%] of the PP composition. During the second injection the soluble fraction (at low temperature) and the crystalline fraction (at high temperature) with the crystallization cycle are measured (wt.-% SF, wt.-% C2, IV).

**Intrinsic viscosity**

The intrinsic viscosity (iV) is measured according to DIN ISO 1628/1, October 1999, in Decalin at 135 °C.

**Melt Flow Rate**

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230 °C and a load of 2.16 kg.

**Density:**

The density is measured according to ISO 1183-187. Sample preparation is done by compression moulding in accordance with ISO 1872-2:2007.

**The xylene soluble fraction at room temperature (XCS, wt.-%):** The amount of the polymer soluble in xylene is determined at 25 °C according to ISO 16152; $5^{th}$ edition; 2005-07-01.

**DSC analysis, melting temperature ($T_m$) and heat of fusion ($H_f$), crystallization temperature ($T_c$) and heat of crystallization ($H_c$):** measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225 °C. Crystallization temperature ($T_c$) and crystallization enthalpy ($H_c$) are determined from the cooling step, while melting temperature ($T_m$) and melting enthalpy ($H_m$) are determined from the second heating step.

**The Flexural Modulus** is determined according to ISO 178 method A (3-point bending test) on 80 mm × 10 mm × 4 mm specimens. Following the standard, a test speed of 2 mm/min and a span length of 16 times the thickness was used. The testing temperature was 23±2 ° C. Injection moulding was carried out according to ISO 19069-2 using a melt temperature of 230 °C for all materials irrespective of material melt flow rate.

**Notched impact strength (NIS)**

The Charpy notched impact strength (NIS) is measured according to ISO 179 1eA at +23 °C or -20 °C, using injection moulded bar test specimens of 80×10×4 $mm^3$ prepared in accordance with ISO 19069-2 using a melt temperature of 230 °C for all materials irrespective of material melt flow rate.

**Inorganic residues**

Inorganic residues are quantified according to DIN ISO 1172: 1996 using a Perkin Elmer TGA 8000. Approximately 10-20 mg of material was placed in a platinum pan. The temperature was equilibrated at 50 °C for 10 minutes, and afterwards raised to 950 °C under nitrogen at a heating rate of 20 °C/min. The ash content was evaluated as the weight % at 850 °C.

**Black spot quantification (amount of defects having certain particle sizes)**

Digital images of 5 injection moulded plaques were collected with a Canon EOS R6 camera. Settings were fixed such that a resolution of about 15 pixel/mm were obtained. Once the image had been converted to grey scale and the intensity normalized between 0 and 256, the exposure time was fixed such that a grey level of ca. 160 was obtained for the plaques.

Image analysis was performed with the Wavemetrics IgorPro software. A Region of Interest area was fixed inside the plaques, with size of $2100 \times 1125$ pixels$^2$. A Prewitt edge detection algorithm, set with threshold of 10, was used to identify the particles on the surface. The edge image was then analysed to gather information about the number and size of particles detected, with a minimum area of 5 pixels and excluding particles touching the border of the area analysed. This operation was repeated for the 5 plaques imaged, and a size distribution of particles was created. The number of particles was normalized by the total area imaged in the 5 plaques, and therefore a frequency of particles as #/cm$^2$ was obtained. The particles were grouped in bins according to their size, with bin size of 0.05 mm$^2$.

**Amount of iPP, Polystyrene, Polyethylene (and ethylene containing copolymers), poly(ethylene terephthalate), and amount of Polyamide-6**

Calibration standards are prepared by blending iPP and HDPE to create a calibration curve. The thickness of the films of the calibration standards are 300 μm. For the quantification of the iPP, PS and PA 6 content in the samples quantitative IR spectra are recorded in the solid-state using a Bruker Vertex 70 FTIR spectrometer. Spectra are recorded on 25×25 mm square films of 50-100 μm thickness prepared by compression moulding at 190 °C and 4 - 6 mPa. Standard transmission FTIR spectroscopy is employed using a spectral range of 4000-400 cm$^{-1}$, an aperture of 6 mm, a spectral resolution of 2 cm$^{-1}$, 16 background scans, 16 spectrum scans, an interferogram zero filling factor of 32 and Norton Beer strong apodisation.

The absorption of the band at 1167 cm$^{-1}$ in iPP is measured and the iPP content is quantified according to a calibration curve (absorption/thickness in cm versus iPP content in weight %).

The absorption of the band at 1601 cm$^{-1}$ (PS), at 1513 cm$^{-1}$ (PET) and 3300 cm$^{-1}$ (PA6) are measured and the PS, PET and PA6 content quantified according to the calibration curve (absorption/thickness in cm versus PS, PET and PA content in wt.-%). The content of polyethylene and ethylene containing copolymers is obtained by subtracting (iPP+PS+PET+PA6) from 100, taking into account the content of non-polymeric impurities as determined in the methods below. The analysis is performed as double determination.

**Static headspace analysis for determination of odorant contents**

The parameters of the applied headspace gas chromatography mass spectrometry (HS/GC/MS) method are described here.

For the measurement of a standard solution, 5 μl of a standard solution containing 0.072 μg/ml acetaldehyde, 0.075 μg/ml hexanal, 0.208 μg/ml acetic acid, 0.081 μg/ml D-limonene, 1.499 μg/ml acetone and 0.078 μg/ml tert-butanol in 2-butanol solvent were injected into a 20 ml HS vial and tightly closed with a PTFE cap. Each HS/GC/MS test sequence of sample measurements included the analysis of such a standard.

The samples were also analysed by HS/GC/MS in order to determine acetaldehyde, hexanal, acetic acid, D-limonene, acetone and tert-butanol. Therefore, aliquots of 2.000 ± 0.100 g of a sample and where applicable additional scavenger amounts were weighed in a 20 ml HS vial and tightly sealed with a PTFE cap. In samples CE1, CE2, IE1, IE2, about 10 g of the sample were cryo-milled before weighing in the aliquot. Otherwise, the aliquot of sample pellets was weighed in directly (CE3, CE4, CE5, IE3, IE4, IE5). Where applicable, scavengers were added according to the recipe shown in table 4. Therefore, about 5 mg of scavenger was weighed into a 20 ml head-space vial (for the cases with 0.25% scavenger in the blend). About 20 mg of scavenger was weighed for the case of 1 wt% in the final blend.

Each of the closed vials was heated up to 250 °C and kept at this temperature for 10 min and cooled down to ambient temperature.

After the thermal treatment, the samples were analysed by HS/GC/MS at 100 °C / 2 h isothermal headspace conditions.

Applied headspace parameters for the analyses of standards and samples differed in the vial equilibration time and the HS oven temperature. Apart from that, method parameters were kept the same for standard and sample runs. The mass spectrometer was operated in scan mode and a total ion chromatogram (TIC) was recorded for each analysis. Identification of substances was supported by deconvolution and a retention time comparison to the respective marker substance in the standard. More detailed information on method parameters and data evaluation software is given below:

• HS parameter (Agilent G1888 Headspace Sampler)

| | |
|---|---|
| Vial equilibration time: | 5 min (standard), 120 min (sample) |
| Oven temperature: | 200 °C (standard), 100 °C (sample) |
| Loop temperature: | 205 °C |
| Transfer line temperature: | 210 °C |
| Low shaking | |

• GC parameter (Agilent 7890A GC System)

| | |
|---|---|
| Column: | ZB-WAX 7HG-G007-22 (30 m x 250 μm x 1 μm) |
| Carrier gas: | Helium 5.0 |
| Flow: | 2 ml/min |
| Split: | 10:1 |
| GC oven program: | 35 °C for 0.1 min |
| | 10 °C/min until 25 0 °C |
| | 250 °C for 1 min |

• MS parameter (Agilent 5975C inert XL MSD)

| | |
|---|---|
| Acquisition mode: | Scan |
| Scan parameters: | |
| Low mass: | 20 |
| High mass: | 200 |
| Threshold: | 10 |

• Software/Data evaluation

MSD ChemStation F.01.03.2357
MSD ChemStation E.02.02.1431
AMDIS GC/MS Analysis Version 2.71
NIST Mass Spectral Library (Version 2011) NIST11.L
Microsoft Excel Versions 2010 and 2016

Data evaluation

For further data evaluation extracted ion chromatograms (EICs) of the measured marker compounds in the standard and in the samples were used. The corresponing target ions are depicted in Table 1.

**Table 1:** Retention times and substance specific target ions of selected marker substances.

| Substance | Retention time / min | Target ion (m/z) |
|---|---|---|
| Acetaldehyde | 1.6 | 44 |
| Acetone | 2.3 | 58 |
| tert-Butanol | 3.1 | 59 |

(continued)

| Substance | Retention time / min | Target ion (m/z) |
|---|---|---|
| Hexanal | 5.7 | 44 |
| D-Limonene | 7.6 | 136 |
| Acetic acid | 11.5 | 60 |

The standard concentration of a marker substance in the HS vial ( $C_G^{Standard}\,[\mathrm{mg/m^3}]$ ) was calculated according equation 1, where the marker substance concentration in the liquid standard ( $C_L^{Standard}\,[\mathrm{\mu g/ml}]$ ) was multiplied by the injection volume ( $V_L^{Injection}\,[\mathrm{\mu l}]$ ) of the standard and divided by the volume of the HS vial ( $V_G^{HS}\,[ml]$ ). Here, a HS volume of 20 ml is used by default.

$$C_G^{Standard} = \frac{C_L^{Standard} * V_L^{Injection}}{V_G^{HS}} \qquad \text{Equation 1}$$

For each marker compound in the standard a response factor (Rf) was calculated according equation 2.

$$Rf = \frac{C_G^{Standard}}{Peak\ area^{Standard}} \qquad \text{Equation 2}$$

Therein, the marker compound concentration is divided by the integrated peak area of the corresponding marker compound in the EIC (*Peak area*$^{Standard}$).

In order to estimate the respective marker compound concentration in the headspace of a sample ( $C_G^{Sample}\,[\mathrm{mg/m^3}]$ ), equation 3 was used. Therefore, the obtained response factor from equation 2 is multiplied by the peak area of the corresponding marker compound in the EIC of the sample run (*Peak area*$^{Sample}$).

$$C_G^{Sample} = Rf * Peak\ area^{Sample} \qquad \text{Equation 3}$$

## 2. Examples

### 2.1 Synthesis of heterophasic propylene-ethylene copolymer (HECO)

The catalyst used for producing HECO was a Ziegler-Natta catalyst from Borealis having Ti-content of 1.9 wt.-% (as described in EP 591 224). Before the polymerization, the catalyst was prepolymerized with vinyl-cyclohexane (VCH) as described in EP 1 028 984 and EP 1 183 307. The ratio of VCH to catalyst of 1:1 was used in the preparation, thus the final poly-VCH content was less than 100 ppm.

The subsequent polymerization has been effected under the following conditions.

**Table 1** Polymerization conditions for the HECOs

| | | HECO |
|---|---|---|
| **Prepolymerization** | | |
| [Co]/[ED] | [mol/mol] | 40 |
| [Co]/[Ti] | [mol/mol] | 230 |
| Temperature | [°C] | 30 |
| Residence time | [min] | 5 |
| **Loop reactor** | | |
| Temperature | [°C] | 72 |

(continued)

| Loop reactor | | |
|---|---|---|
| Split | [wt.-%] | 30 |
| H2/C3 | [kg/ton] | 18.8 |
| $MFR_2$ | [g/10 min] | 110 |
| 1st Gas phase reactor | | |
| Temperature | [°C] | 80 |
| Split | [wt.-%] | 35 |
| H2/C3 | [mol/kmol] | 137 |
| $MFR_2$ | [g/10 min] | 80 |
| $MFR_2$ (1st GPR fraction) | [g/10 min] | 62 |
| XCS | [wt.-%] | 2.0 |
| 2nd Gas phase reactor | | |
| Temperature | [°C] | 70 |
| Split | [wt.-%] | 17 |
| H2/C3 | [mol/kmol] | 119 |
| C2/C3 | [mol/kmol] | 515 |
| $MFR_2$ | [g/10 min] | 15 |
| C2 | [wt.-%] | 7.9 |
| 3rd Gas phase reactor | | |
| Temperature | [°C] | 85 |
| Split | [wt.-%] | 18 |
| H2/C3 | [mol/kmol] | 285 |
| C2/C3 | [mol/kmol] | 1429 |
| $MFR_2$ | [g/10 min] | 18 |
| C2 | [wt.-%] | 18.9 |
| Final Properties (pellet) | | |
| $MFR_2$ | [g/10 min] | 18 |
| C2 | [wt.-%] | 20 |
| SF | [wt.-%] | 30 |
| C2(SF) | [wt.-%] | 45 |
| iV(SF) | [dL/g] | 2.40 |
| CF | [wt.-%] | 70 |
| C2(CF) | [wt.-%] | 9 |
| iV (CF) | [dL/g] | 1.44 |
| $T_m$ | [°C] | 165 |
| $T_c$ | [°C] | 115 |

Heterophasic propylene-ethylene copolymer HECO was compounded in a co-rotating twin-screw extruder Coperion ZSK 47 at 220 °C with 0.15 wt.-% antioxidant (Irganox B215 FF from BASF AG, Germany; this is a 1:2-mixture of Pentaerythrityl-tetrakis(3-(3',5'-di-tert. butyl-4-hydroxyphenyl)-propionate, CAS-no. 6683-19-8, and Tris (2,4-di-t-butylphenyl) phosphite, CAS-no. 31570-04-4); 0.05 wt.-% of Ca-stearate (CAS-no. 1592-23-0, commercially available from

Faci, Italy).

**2.2 Mixed-plastic polypropylene blends (B)**

The properties of the mixed-plastic polypropylene blends (B1 and B2) are given in Table 2.

**Table 2 Properties of mixed-plastic polypropylene blends (B)**

| | | B1 | B2 |
|---|---|---|---|
| Density | [kg/m$^3$] | 917 | 920 |
| $MFR_2$ | [g/10 min] | 25 | 17 |
| C2(total) | [wt.-%] | 5 | 8 |
| SF | [wt.-%] | 11 | 11 |
| C2(SF) | [wt.-%] | 28 | 29 |
| iV(SF) | [dL/g] | 1.71 | 1.70 |
| CF | [wt.-%] | 89 | 89 |
| C2(CF) | [wt.-%] | 3 | 5 |
| iV (CF) | [dL/g] | 1.55 | 1.69 |
| Inorganic residues | [wt.-%] | 1 | 1 |
| Flexural Modulus | [MPa] | 1344 | 1247 |
| Charpy NIS (23 °C) | [kJ/m$^2$] | 5.14 | 5.50 |
| Defect content (0.05 to 0.10 mm$^2$) | [particles/cm$^2$] | 0.2 | 3.0 |

The mixed-plastic polypropylene blend (B 1) further comprises minor amounts of polystyrene, polyamide-6 and fatty acids.

**2.3 Compounding of Inventive and Comparative Compositions**

The inventive and comparative compositions were prepared by compounding in a co-rotating twin-screw extruder Coperion ZSK 40 at 220 °C.

In addition to the HECOs and the mixed-plastic polypropylene blends described above, the following commercially available components were also employed:

| | |
|---|---|
| h-PP | a commercial propylene homopolymer HF955MO, commercially available from Borealis AG (Austria), having $MFR_2$ (230 °C) of 20 g/10 min, a density of 905 kg/m$^3$, a flexural modulus of 2000 MPa and a Charpy NIS (+23 °C) of 2.5 kJ/m$^2$. |
| EC | an elastomeric ethylene-octene copolymer with a trade name of Engage 8842, commercially available from Dow Chemicals (USA), having an $MFR_2$ (190 °C) of 1.0 g/10 min and a density of 857 kg/m$^3$. |
| PMP | a commercial maleic anhydride-grafted polypropylene (MAH-PP) Scona TPPP 8112 GA commercially available from BYK Chemie (Germany), having an $MFR_2$ (190 °C) of 100 g/10 min and a MAH content of 1.2 wt.-%. |
| F1 | chopped glass fibers DS 2200-13P from 3B Fibreglass (Belgium), having a diameter of 13 $\mu$m and a fiber length of 4 mm. |
| CBMB | a LDPE-based masterbatch CMB520 Black 7-PE-30 from QolorTech BV (Netherlands) containing 30 wt.-% of carbon black. |
| A1 | a S-based antioxidant with a trade name of Irganox PS-802 FL, commercially available from BASF AG (Germany). |
| A2 | an antioxidant blend with a trade name of Irganox B215 FF, commercially available from BASF AG (Germany), being a |

(continued)

| | |
|---|---|
| | 1:2-mixture of Pentaerythrityl-tetrakis(3-(3',5'-di-tert. butyl-4-hydroxyphenyl)-propionate, CAS-no. 6683-19-8, and Tris (2,4-di-t-butylphenyl) phosphite, CAS-no. 31570-04-4); |
| MB carrier | a masterbatch carrier propylene homopolymer with a trade name of HC001 A, commercially available from Borealis AG (Austria). |
| Alpha-cyclodextrin | CAS-no. 10016-20-3, commercially available from Sigma Aldrich (Germany). |
| Anthranilamide | CAS-no. 88-68-6, commercially available from Sigma Aldrich (Germany). |
| Barbituric acid | CAS-no. 67-52-7, commercially available from Sigma Aldrich (Germany). |
| m-xylylenediamine | CAS-no. 1477-55-0, commercially available from Sigma Aldrich (Germany). |

In a first step, a representative recyclate-containing polypropylene composition (PP) suitable for automotive applications was produced by blending according to the recipe given in Table 3.

**Table 3** Polypropylene composition (PC) suitable for automotive applications

| | | PP |
|---|---|---|
| **Ingredients** | | |
| B2 | [wt.-%] | 39.30 |
| HECO | [wt.-%] | 10.00 |
| h-PP | [wt.-%] | 25.00 |
| EC | [wt.-%] | 2.00 |
| PMP | [wt.-%] | 1.00 |
| F1 | [wt.-%] | 20.00 |
| CBMB | [wt.-%] | 0.70 |
| A1 | [wt.-%] | 0.40 |
| A2 | [wt.-%] | 0.25 |
| MB carrier | [wt.-%] | 1.35 |
| **Properties** | | |
| $MFR_2$ | [g/10 min] | 10 |
| C2(total) | [wt.-%] | 9 |
| SF | [wt.-%] | 12 |
| C2(SF) | [wt.-%] | 44 |
| iV(SF) | [dL/g] | 1.96 |
| CF | [wt.-%] | 88 |
| C2(CF) | [wt.-%] | 1.2 |
| iV(CF) | [dL/g] | 1.63 |
| Defect content (0.05 to 0.10 $mm^2$) | [particles/$cm^2$] | 1.2 |

The recyclate blends B1 and B2, as well as the recyclate-containing composition (PC), were further blended with various further compounds to test said compounds' potential as aldehyde scavengers. The recipes of these comparative and inventive examples are given in Table 4, as well as their odorant contents. The odorant contents of CE1-CE2 and IE1-IE2 were measured on powdered samples (formed by cryo-milling of pellets), whilst the odorant contents of CE3-CE5 and IE3-IE5 were measured on pelletized samples.

In all cases, the $MFR_2$ and CRYSTEX properties of the compositions were unchanged by the addition of the aldehyde scavengers, i.e. the properties of the inventive and comparative examples in this regard are simply the same as the base resin employed (i.e. the same as CE1, CE2, or CE3).

As can be seen from Table 4, anthranilamide and barbituric acid are both effective at reducing the content of acetaldehyde and hexanal in recyclates (IE1 vs CE1 and IE2 vs CE2) and in recyclate-containing compositions (IE3 to IE5

vs CE3), with low amounts, such as 0.25 wt.-% of aldehyde scavenger, sufficient to achieve a considerable effect (whilst higher amounts such as 1.00 wt.-% are able to improve the effect yet further). The content of non-aldehyde odorants is not significantly altered by the presence of anthranilamide or barbituric acid. Alpha-cyclodextrin, on the other hand is ineffective at reducing aldehyde content (CE4 vs CE3) and, whilst m-xylylenediamine is capable of reducing aldehyde content, it simultaneously raises the content of acetone and tert-butanol to almost double their initial levels (CE5 vs CE3).

**Table 4** Recipes for inventive and comparative examples and odorant content

| | | CE1 | IE1 | CE2 | IE2 | CE3 | CE4 | IE3 | IE4 | IE5 | CE5 |
|---|---|---|---|---|---|---|---|---|---|---|---|
| **Components** | | | | | | | | | | | |
| B1 | [wt.-%] | 100 | 99.75 | - | - | - | - | - | - | - | - |
| B2 | [wt.-%] | - | - | 100 | 99.75 | - | - | - | - | - | - |
| PP | [wt.-%] | - | - | - | - | 100 | 99.75 | 99.75 | 99.75 | 99.00 | 99.75 |
| Alpha-cyclodextrin | [wt.-%] | - | - | - | - | - | 0.25 | - | - | - | - |
| Anthranilamide | [wt.-%] | - | - | - | - | - | - | 0.25 | - | - | - |
| Barbituric acid | [wt.-%] | - | 0.25 | - | 0.25 | - | - | - | 0.25 | 1.00 | - |
| m-xylylenediamine | [wt.-%] | - | - | - | - | - | - | - | - | - | 0.25 |
| **Odorant contents** | | | | | | | | | | | |
| D-limonene | [mg/m$^3$] | 6 | 7 | 55 | 55 | 25 | 25 | 25 | 25 | 25 | 25 |
| Hexanal | [mg/m$^3$] | 55 | 14 | 63 | 36 | n.d.* | n.d.* | n.d.* | n.d.* | n.d.* | n.d.* |
| Acetaldehyde | [mg/m$^3$] | 3060 | 259 | 3328 | 1646 | 300 | 287 | 47 | 33 | 14 | n.d.* |
| Acetone | [mg/m$^3$] | 4650 | 3102 | 5433 | 4750 | 174 | 154 | 170 | 213 | 220 | 434 |
| tert-Butanol | [mg/m$^3$] | 456 | 375 | 148 | 139 | 64 | 46 | 69 | 65 | 65 | 118 |
| *n.d. = not detected, i.e. below the detection limit. | | | | | | | | | | | |

**Claims**

1. A polypropylene composition (PC) comprising:

   a) a mixed-plastic polypropylene blend (PP) having an amount of defects with a particle size in the range from 0.05 to 0.10 mm$^2$ in the range from 0.10 to 4.0 particles/cm$^2$; and
   b) one or more compound(s) reactive with linear alkyl aldehydes.

2. The polypropylene composition (PC) according to claim 1, wherein the one or more compound(s) reactive with linear aldehydes comprises at least one compound having a structure according to formula (I):

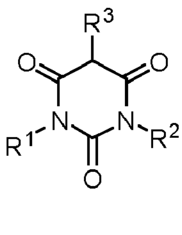
(I)

wherein $R^1$, $R^2$, and $R^3$ are each independently selected from the group consisting of a hydrogen atom, a linear or branched $C_1$-$C_{10}$ alkyl group, a hydroxyl group, an aryl group, a halogen atom, an acetyl group or a cyano group.

3. The polypropylene composition (PC) according to claim 1 or claim 2, wherein the one or more compound(s) reactive with linear aldehydes comprises at least one compound having a structure according to formula (II):

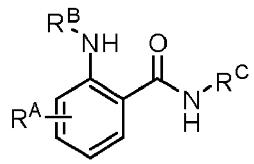

(II)

wherein $R^A$ represents from zero to four substitutions, each substitution being independently selected from the group consisting of a linear or branched $C_1$-$C_{10}$ alkyl group, a linear or branched $C_1$-$C_{10}$ alkoxy group, an aryl group or a halogen atom,
wherein each of $R^B$ and $R^C$ are selected from the group consisting of hydrogen and a linear or branched $C_1$-$C_{10}$ alkyl group.

**4.** The polypropylene composition (PC) according to any one of the preceding claims, wherein the mixed-plastic polypropylene blend (PP) has one or more, preferably all, of the following properties:

a) a melt flow rate ($MFR_2$), determined according to ISO 1133 at 230 °C and 2.16 kg, in the range from 5.0 to 100 g/10 min;
b) an ethylene content (C2(total)), determined by FT-IR spectroscopy calibrated by quantitative $^{13}C$-NMR spectroscopy, in the range from 3.0 to 15.0 wt.-%;
c) a soluble fraction (SF) content, determined according to CRYSTEX QC analysis, in the range from 5.0 to 20.0 wt.-% and a crystalline fraction (CF) content, determined according to CRYSTEX QC analysis, in the range from 80.0 to 95.0 wt.-%;
d) an ethylene content of the soluble fraction (C2(SF)), according to CRYSTEX QC analysis, determined by FT-IR spectroscopy calibrated by quantitative $^{13}C$-NMR spectroscopy, in the range from 15 to 60 wt.-%;
e) an ethylene content of the crystalline fraction (C2(CF)), according to CRYSTEX QC analysis, determined by FT-IR spectroscopy calibrated by quantitative $^{13}C$-NMR spectroscopy, in the range from 0.5 to 6.0 wt.-%;
f) an intrinsic viscosity of the soluble fraction (iV(SF)), according to CRYSTEX QC analysis, determined according to DIN ISO 1628/1, in the range from 1.50 to 2.50 dL/g;
g) an intrinsic viscosity of the crystalline fraction (iV(CF)), according to CRYSTEX QC analysis, determined according to DIN ISO 1628/1, in the range from 1.00 to 2.00 dL/g.

**5.** The polypropylene composition (PC) according to any one of the preceding claims, wherein the mixed-plastic polypropylene blend (PP) is obtainable by blending:

a) from 0 to 50 wt.-%, relative to the total weight of the mixed-plastic polypropylene blend (PP), of one or more heterophasic propylene-ethylene copolymer(s) (HECO);
b) from 0 to 50 wt.-%, relative to the total weight of the mixed-plastic polypropylene blend (PP), of one or more propylene homopolymer(s) (h-PP);
c) from 0 to 10 wt.-%, relative to the total weight of the mixed-plastic polypropylene blend (PP), of one or more elastomeric ethylene copolymer(s) (E);
d) from 20 to 90 wt.-%, relative to the total weight of the mixed-plastic polypropylene blend (PP), of a mixed plastic polypropylene blend (B) having an amount of defects with a particle size in the range from 0.05 to 0.10 $mm^2$ in the range from 0.10 to 4.0 particles/$cm^2$;
e) from 0 to 30 wt.-%, relative to the total weight of the mixed-plastic polypropylene blend (PP), of carbon and/or glass fibers (F1);
f) from 0 to 30 wt.-%, relative to the total weight of the mixed-plastic polypropylene blend (PP), of inorganic filler(s) (F2) different to the carbon and/or glass fibers (F1);
g) from 0 to 10 wt.-%, relative to the total weight of the mixed-plastic polypropylene blend (PP), of a polar group-modified polypropylene (PMP); and
h) from 0 to 5 wt.-%, relative to the total weight of the mixed-plastic polypropylene blend (PP), of further additives different to the carbon and/or glass fibers (F1), the inorganic filler(s) (F2) and the polar group-modified polypropylene (PMP).

**6.** The polypropylene composition (PC) according to claim 5, wherein the mixed-plastic polypropylene blend (PP) is obtainable by blending:

a) from 5 to 30 wt.-%, relative to the total weight of the mixed-plastic polypropylene blend (PP), of one or more

heterophasic propylene-ethylene copolymer(s) (HECO);

b) from 5 to 30 wt.-%, relative to the total weight of the mixed-plastic polypropylene blend (PP), of one or more propylene homopolymer(s) (h-PP);

c) from 1 to 5 wt.-%, relative to the total weight of the mixed-plastic polypropylene blend (PP), of one or more elastomeric ethylene copolymer(s) (E);

d) from 20 to 70 wt.-%, relative to the total weight of the mixed-plastic polypropylene blend (PP), of a mixed plastic polypropylene blend (B) having an amount of defects with a particle size in the range from 0.05 to 0.10 $mm^2$ in the range from 0.10 to 4.0 particles/$cm^2$;

e) from 10 to 30 wt.-%, relative to the total weight of the mixed-plastic polypropylene blend (PP), of glass fibers (F1);

f) from 0.5 to 5 wt.-%, relative to the total weight of the mixed-plastic polypropylene blend (PP), of a polar group-modified polypropylene (PMP); and

g) from 0 to 5 wt.-%, relative to the total weight of the mixed-plastic polypropylene blend (PP), of further additives different to the glass fibers (F1) and the polar group-modified polypropylene (PMP).

**7.** The polypropylene composition (PC) according to claim 5 or claim 6, wherein the mixed plastic polypropylene blend (B) originates from post-consumer waste.

**8.** The polypropylene composition (PC) according to any one of claims 5 to 7, having an acetaldehyde concentration, determined by solid phase microextraction (HS-SPME-GC-MS), in the range from 0 to 100 mg/$m^3$.

**9.** The polypropylene composition (PC) according to any one of claims 1 to 4, wherein the mixed plastic polypropylene blend (PP) originates from post-consumer waste.

**10.** The polypropylene composition (PC) according to claim 9, having an acetaldehyde concentration, determined by solid phase microextraction (HS-SPME-GC-MS), in the range from 100 to 2000 mg/$m^3$.

**11.** The polypropylene composition (PC) according to any one of the preceding claims, having an acetaldehyde concentration, determined by solid phase microextraction (HS-SPME-GC-MS), in the range from 0 to 50% of the value of the acetaldehyde concentration of the mixed plastic polypropylene blend (PP), also determined by solid phase microextraction (HS-SPME-GC-MS).

**12.** The polypropylene composition (PC) according to any one of the preceding claims, comprising, more preferably consisting of:

a) from 98.0 to 99.9 wt.-%, relative to the total weight of the polypropylene composition (PC), of the mixed-plastic polypropylene blend (PP); and

b) from 0.1 to 2.0 wt.-%, relative to the total weight of the polypropylene composition (PC), of the one or more compound(s) reactive with linear alkyl aldehydes.

**13.** An article, preferably an injection-moulded article, comprising the polypropylene composition (PC) according to any one of the preceding claims in an amount of at least 95 wt.-%, more preferably at least 98 wt.-%, most preferably at least 99 wt.-%.

**14.** Use of a compound having a structure according to formula (I):

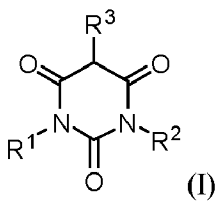

(I)

wherein $R^1$, $R^2$, and $R^3$ are each independently selected from the group consisting of a hydrogen atom, a linear or branched $C_1$-$C_{10}$ alkyl group, a hydroxyl group, an aryl group, a halogen atom, an acetyl group or a cyano group, for reducing the acetaldehyde content and/or the hexanal content of a polypropylene composition derived at least partially from post-consumer waste, without simultaneously increasing the acetone content by more than 30% and

without simultaneously increasing the tert-butanol content by more than 10%.

**15.** Use of a compound having a structure according to formula (II):

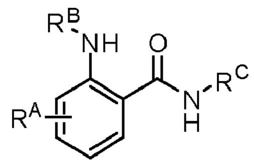

(II)

wherein $R^A$ represents from zero to four substitutions, each substitution being independently selected from the group consisting of a linear or branched $C_1$-$C_{10}$ alkyl group, a linear or branched $C_1$-$C_{10}$ alkoxy group, an aryl group or a halogen atom,
wherein each of $R^B$ and $R^C$ are selected from the group consisting of hydrogen and a linear or branched $C_1$-$C_{10}$ alkyl group,
for reducing the acetaldehyde content and/or the hexanal content of a polypropylene composition derived at least partially from post-consumer waste, without simultaneously increasing the acetone content by more than 30% and without simultaneously increasing the tert-butanol content by more than 10%.

Europäisches Patentamt
European Patent Office
Office européen des brevets

# PARTIAL EUROPEAN SEARCH REPORT

under Rule 62a and/or 63 of the European Patent Convention. This report shall be considered, for the purposes of subsequent proceedings, as the European search report

Application Number
EP 23 17 4230

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 632 874 B2 (COCA COLA CO [US]) 14 October 2003 (2003-10-14) | 1-13 | INV. C08L23/10 |
| Y | * the whole document * | 1-13 | |
| Y | US 2004/146674 A1 (HOWELL EARL EDMONDSON [US] ET AL) 29 July 2004 (2004-07-29) * the whole document * | 1-13 | |
| Y | US 2017/001344 A1 (BALTAZAR-Y-JIMENEZ ALEXIS [CA] ET AL) 5 January 2017 (2017-01-05) * the whole document * | 1-13 | |
| X | US 2021/079202 A1 (ZHANG YAHONG [CN] ET AL) 18 March 2021 (2021-03-18) * the whole document * | 14 | |
| | -/-- | | |

TECHNICAL FIELDS SEARCHED (IPC)

C08K
C08L

## INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

see sheet C

2

| Place of search | Date of completion of the search | Examiner |
|---|---|---|
| Munich | 24 January 2024 | Rouault, Yannick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04E07)

Europäisches Patentamt
European Patent Office
Office européen des brevets

# PARTIAL EUROPEAN SEARCH REPORT

Application Number
EP 23 17 4230

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CABANES A. ET AL: "A review on VOCs from recycled plastics", SUSTAINABLE MATERIALS AND TECHNOLOGIES, vol. 25, 1 September 2020 (2020-09-01), page e00179, XP093052200, ISSN: 2214-9937, DOI: 10.1016/j.susmat.2020.e00179 * the whole document * ----- | 15 | |
| Y | WO 2005/092983 A1 (COLORMATRIX EUROPE LTD [GB]; ZENG FUQUAN [GB]; FROST MARK [GB]) 6 October 2005 (2005-10-06) * the whole document * ----- | 15 | |
| | | | TECHNICAL FIELDS SEARCHED (IPC) |

2

EPO FORM 1503 03.82 (P04C10)

Europäisches Patentamt
European Patent Office
Office européen des brevets

# INCOMPLETE SEARCH SHEET C

Application Number
EP 23 17 4230

Claim(s) completely searchable:
14, 15

Claim(s) searched incompletely:
1-13

Reason for the limitation of the search:

Present claims 1,5 and 6 relate to a product defined (inter alia) by reference to the following unusual parameter: "defects".
The use of this unusual parameter in the present context is considered to lead to a lack of clarity, because the claim does not clearly identify the products encompassed by it as the parameter cannot be clearly and reliably determined by indications in the description or by objective procedures which are usual in the art. This makes it impossible to compare the claim with the prior art. As a result, the application does not comply with the requirement of clarity under Article 84 EPC.
Different kinds of defects are discussed in the description, and according to the units used for said parameter, it seems that so-called "defects" parameter matches the "black spot quantification" in the description.
Aldehydes are highly reactive molecules so that the number of compounds able to react with aldehydes is very broad.
Claim 1 broadly defines the feature b) in terms of its function, namely the possibility to react with aldehydes.
However, the description conveys the impression that this function can only be carried out in a particular way, namely with compounds of formula (I) or (II), and no alternative means are envisaged.
Hence, claim 1 is not supported by the description as required by Article 84 EPC.
The lack of clarity is such that a meaningful search of the whole claimed subject-matter of claim 1 cannot be carried out (Rule 63 EPC).

Europäisches Patentamt
European Patent Office
Office européen des brevets

Application Number
EP 23 17 4230

## CLAIMS INCURRING FEES

The present European patent application comprised at the time of filing claims for which payment was due.

- [ ] Only part of the claims have been paid within the prescribed time limit. The present European search report has been drawn up for those claims for which no payment was due and for those claims for which claims fees have been paid, namely claim(s):

- [ ] No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

**see sheet B**

- [X] All further search fees have been paid within the fixed time limit. The present European search report has been drawn up for all claims.

- [ ] As all searchable claims could be searched without effort justifying an additional fee, the Search Division did not invite payment of any additional fee.

- [ ] Only part of the further search fees have been paid within the fixed time limit. The present European search report has been drawn up for those parts of the European patent application which relate to the inventions in respect of which search fees have been paid, namely claims:

- [ ] None of the further search fees have been paid within the fixed time limit. The present European search report has been drawn up for those parts of the European patent application which relate to the invention first mentioned in the claims, namely claims:

- [ ] The present supplementary European search report has been drawn up for those parts of the European patent application which relate to the invention first mentioned in the claims (Rule 164 (1) EPC).

Europäisches Patentamt
European Patent Office
Office européen des brevets

# LACK OF UNITY OF INVENTION SHEET B

Application Number
EP 23 17 4230

The Search Division considers that the present European patent application does not comply with the requirements of unity of invention and relates to several inventions or groups of inventions, namely:

1. claims: 1-13

A polypropylene composition (PC) comprising:
a) a mixed-plastic polypropylene blend (PP) having an amount of defects with a particle size in the range from 0.05 to 0.10 mm2 in the range from 0.10 to 4.0 particles/cm2
; and
b) one or more compound(s) reactive with linear alkyl aldehydes, wherein the one or more
compound(s) reactive with linear aldehydes comprises at least one compound having a structure according to formula (II).

---

2. claim: 14

Use of a compound having a structure according to formula (I) for reducing the acetaldehyde content and/or the hexanal content of a polypropylene composition derived at least partially from post-consumer waste, without simultaneously increasing the acetone content by more than 30% and without simultaneously increasing the tert-butanol content by more than 10%.

---

3. claim: 15

Use of a compound having a structure according to formula (II) for reducing the acetaldehyde content and/or the hexanal content of a polypropylene composition derived at least partially from post-consumer waste, without simultaneously increasing the acetone content by more than 30% and without simultaneously increasing the tert-butanol content by more than 10%.

---

## ANNEX TO THE EUROPEAN SEARCH REPORT ON EUROPEAN PATENT APPLICATION NO. EP 23 17 4230

This annex lists the patent family members relating to the patent documents cited in the above-mentioned European search report. The members are as contained in the European Patent Office EDP file on
The European Patent Office is in no way liable for these particulars which are merely given for the purpose of information.

24-01-2024

| Patent document cited in search report | Publication date | Patent family member(s) | Publication date |
|---|---|---|---|
| US 6632874 B2 | 14-10-2003 | AR 033474 A1 | 17-12-2003 |
| | | AT E328949 T1 | 15-06-2006 |
| | | CA 2445353 A1 | 07-11-2002 |
| | | EP 1392767 A1 | 03-03-2004 |
| | | ES 2260430 T3 | 01-11-2006 |
| | | JP 2005505638 A | 24-02-2005 |
| | | MX PA03009401 A | 29-01-2004 |
| | | TW 583240 B | 11-04-2004 |
| | | US 2002193481 A1 | 19-12-2002 |
| | | WO 02088237 A1 | 07-11-2002 |
| | | ZA 200307821 B | 07-10-2004 |
| US 2004146674 A1 | 29-07-2004 | AR 041680 A1 | 26-05-2005 |
| | | AT E344764 T1 | 15-11-2006 |
| | | AT E419191 T1 | 15-01-2009 |
| | | CN 1530416 A | 22-09-2004 |
| | | DE 602004003073 T2 | 01-03-2007 |
| | | EP 1442993 A1 | 04-08-2004 |
| | | EP 1739026 A1 | 03-01-2007 |
| | | ES 2271706 T3 | 16-04-2007 |
| | | ES 2317383 T3 | 16-04-2009 |
| | | JP 2004231964 A | 19-08-2004 |
| | | KR 20040070057 A | 06-08-2004 |
| | | MX PA03011437 A | 04-08-2004 |
| | | TW 200413508 A | 01-08-2004 |
| | | US 2004146674 A1 | 29-07-2004 |
| | | US 2007020418 A1 | 25-01-2007 |
| US 2017001344 A1 | 05-01-2017 | CA 2935129 A1 | 02-01-2017 |
| | | US 2017001344 A1 | 05-01-2017 |
| US 2021079202 A1 | 18-03-2021 | BR 112020005910 A2 | 29-09-2020 |
| | | CN 111133048 A | 08-05-2020 |
| | | EP 3688090 A1 | 05-08-2020 |
| | | JP 2020535290 A | 03-12-2020 |
| | | KR 20200055746 A | 21-05-2020 |
| | | TW 201915076 A | 16-04-2019 |
| | | US 2021079202 A1 | 18-03-2021 |
| | | WO 2019061266 A1 | 04-04-2019 |
| WO 2005092983 A1 | 06-10-2005 | EP 1735380 A1 | 27-12-2006 |
| | | US 2008241450 A1 | 02-10-2008 |
| | | WO 2005092983 A1 | 06-10-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0004601 A1
- EP 0859809 A1
- EP 0964877 A1
- EP 1542777 A2
- EP 3647328 A1
- EP 591224 A
- EP 1028984 A
- EP 1183307 A


### Non-patent literature cited in the description


- *CHEMICAL ABSTRACTS*, 6683-19-8
- *CHEMICAL ABSTRACTS*, 31570-04-4
- *CHEMICAL ABSTRACTS*, 1592-23-0
- *CHEMICAL ABSTRACTS*, 10016-20-3
- *CHEMICAL ABSTRACTS*, 88-68-6
- *CHEMICAL ABSTRACTS*, 67-52-7
- *CHEMICAL ABSTRACTS*, 1477-55-0